# EUROPEAN PATENT APPLICATION

(11) **EP 4 813 541 A1**
(43) Date of publication of application: **30.09.2026**
(21) Application number: 26164837.2
(22) Date of filing: 13.03.2026
(51) Int. Cl.: B21D 28/14, B21D 28/22, B21D 43/22, H02K 15/02, H02K 15/0273

(54) **A TOOL AND A METHOD FOR MANUFACTURING ROTOR OR STATOR LAMINATION STACKS FOR ELECTRIC MOTORS**

(30) Priority: 27.03.2025 SI 202500044
(71) Applicant: Cafuta d.o.o., 1370 Logatec (SI)
(72) Inventor: Cafuta, Gasper, 1370 Logatec (SI)
(74) Representative: Patentni Biro AF d.o.o.

(57) **Abstract**

The present invention belongs to the field of devices for manufacturing electric motors, particularly to the field of devices for manufacturing lamination stacks. The invention relates a tool and a method for manufacturing rotor or stator lamination stacks for electric motors and an electric motor with such lamination stacks.

The essence of the tool is in that it comprises a mechanism for faster adjustment of the brakes, which comprises:
- a vertical wedge, which simultaneously functions as a brake,
- an adjustment element mounted on the base of the brake housing, wherein the adjustment element comprises:
∘ a rocking element with a rounded lower part that allows rocking, and with two arms adapted for contact with a spring and the vertical wedge, respectively,
∘ the pre-tensioned spring, and
∘ an element, preferably a screw, arranged for a contact with the spring and for the pre-tensioning of the spring, wherein the spring allows setting of the braking force, so that the said element, preferably the ascrew, can be used to set the spring to a precise force, so that the latter is movable downwards, which rocks the rocking element and pushes the vertical wedge upwards.

## Description

### Field of the invention

The present invention belongs to the field of devices for manufacturing electric motors, particularly to the field of devices for manufacturing lamination stacks. The invention relates a tool and a method for manufacturing rotor or stator lamination stacks for electric motors and an electric motor with such lamination stacks.

### Background of the invention and the technical problem

An electric motor is a machine that converts electrical energy into mechanical energy and functions as a drive in numerous machines and devices. Laminations made from electromagnetic sheet metal are an integral part of every electric motor. Several methods are used for their production, including high-speed stamping - cutting electromagnetic sheet metal with thicknesses from 0.25 to 1 mm. Laminations are part of the rotor or the stator and can be made individually or in stacks.

In the use of the so-called interlocking system, the laminations are connected into stacks through mechanical clamps, which are made in preliminary steps in the tool. The stack is formed in the final cutting phase. The stack of laminations travels through a cutting die and a braking system, which provide the force necessary to connect the laminations into a stack. Ensuring the appropriate force on the laminations stack is crucial for achieving quality of the product. If the force provided by the brakes is too small, the laminations stack lacks compactness; on the other hand, if it is too high, the laminations stack may suffer damage and/or dimensional inconsistency.

Adjusting the resistance provided by the brakes is very time-consuming in the tools currently on the market, and every correction requires removing the tool from the machine and intervention by a toolmaker. Usually, even a single adjustment of the brakes is time-consuming, wherein for optimal operation, at least three corrections are needed.

The technical problem, which is addressed by the present invention, is constructional design of a tool allowing fast adjustment of braking forces. In general, each product has several brakes installed, it is desired that the invention allows adjusting the brakes separately.

### Prior art

Patent EP0133859 describes a method for connecting laminations into stacks and a shape of clamp for connecting the laminations into a stack. A device for performing said method comprises a tracking tool with an upper die and a lower die and a plurality of working stations, wherein the last station is installed in the bottom part of the tool and is arranged for cutting, and a puncher. This solution is not similar to the present invention, as the shape of brakes is different.

Document JP2012044800 relates to a device for forming lamination stacks for a rotor core and a stator core used in electromotors. The device comprises a cutting die, a system of brakes installed under the cutting die, wherein the system of brakes is arranged to generate pressure and ensure a force needed for connecting laminations into a stack. This solution differs in the mechanism for brake adjustment, as it uses pneumatic cylinders, which vertically move the vertical brake wedges. The present invention does not use any pneumatic cylinders and is thus less complex.

### Description of the solution to the technical problem

The present invention solves all problems of known solutions as defined in the independent claim, whereas the preferred embodiments are described in dependent claims.

The tool for manufacturing lamination stacks comprises a cutting die, a system of brakes installed below the cutting die and configured to generate pressure and ensure the force needed for connecting the laminations into a stack. The brakes generate pressure on the sides of the stack, which is being made or the previous stack. Consequently, the frictional force between the brakes and the package in the brake system causes a force in a direction opposite to the direction of travel of the package. Known solutions include brakes that have parallel surfaces, which is solved differently in the present invention.

The essence of the invention is in that the tool for manufacturing lamination stacks for a rotor or a stator of an electric motor comprises a mechanism for faster setting or adjustment of brakes, which is at least partly installed in the housing of the brakes, and comprises:
- a vertical wedge, which simultaneously functions as a brake,
- an adjustment element mounted on the base of the brake housing, wherein the adjustment element comprises:
   ∘ a rocking element with a rounded lower part that allows rocking, and with two arms adapted for contact with a spring and the vertical wedge, respectively,
   ∘ a pre-tensioned spring, which is preferably a disc or spiral spring, and
   ∘ an element, preferably a screw, arranged for a contact with the spring and for the pre-tensioning of the spring, wherein the spring allows setting of the braking force, so that the said element, preferably the ascrew, can be used to set the spring to a precise force, so that the latter is movable downwards, which rocks the rocking element and pushes the vertical wedge upwards.

The vertical wedge has an inclined surface, which is a vertical surface of the wedge arranged to ensure radial displacement, which is a result of the vertical movement of the entire wedge due to the adjustment of the adjustment element. The force acting via the spring on the rocking element causes the vertical wedge to move upwards via the latter. When the force on the rocking element is increased using the screw, the vertical wedge will thus move upwards. The upward movement of the vertical brake will simultaneously cause the vertical wedge (brake) to move inwards due to the interaction with the vertical ramp of the wedge. The vertical wedge movement upwards increases the overhang over the plate pack and the brake, which increases the braking effect. Conversely, when the force is reduced, the vertical wedge moves downwards, which causes the braking effect to decrease.

So, when the braking force is greater than the force caused by the spring, the brake will move downwards and, due to the wedge, away from the laminations pack - and as a result, the braking force is decreased.

In the preferred embodiment the screws are installed parallely to the vertical wedge on the outer side. The access to the screws is ensured from the top of the bottom part of the tool.

The method for adjustment in case of easy access to the adjustment elements, preferably screws, is simple and comprises adjustment of at least one screw, if needed more screws, with a suitable tool such as a hand tool or a motor-driven tool, to achieve a suitable position of the horizontal and consequently the vertical wedge.

The method for manufacturing of the lamination stacks comprises a step of movement of the lamination stack through the cutting die and through a system of brakes, which ensure the force needed to connect lamination into a stack, wherein the method is characterized in that the step of movement of the lamination stack through the cutting die and the system of brakes comprises setting or adjusting at least one adjustment element, preferably using a screw adjusting the spring, if needed more screws, with a suitable tool, such as hand-tool or a motor driven tool, to achieve the optimal pretension of the spring. The laminations move through the brakes with each impact of the tool/press. Adjustment may be performed between the impacts, usually due to the access to the screws the tape has to be removed from the tool. However, if the access to the screws is achieved in a different manner, the tool does not have to be stopped for adjustment.

The invention enables that each brake is individually adjusted. Usually, the tool comprises several brakes, most commonly between 4 and 8.

The invention also relates to a lamination stack for a rotor or a stator of an electric motor, characterized in that it is made with the tool or the method according to the above description. At the same time the invention relates to an electric motor with lamination stack made using the tool as described above and/or using the above-described method.

The invention will be described in further detail based on an exemplary embodiment and figures, which show:
- Figure 1: The mechanism according to an exemplary embodiment
- Figure 2a: A cross-section of the mechanism shown in figure 1
- Figure 2b: Schematic view of the mechanism installed in the brake module
- Figure 2c: A cross-section of the tool with the mechanism according to the exemplary embodiment, wherein the access to screws is shown

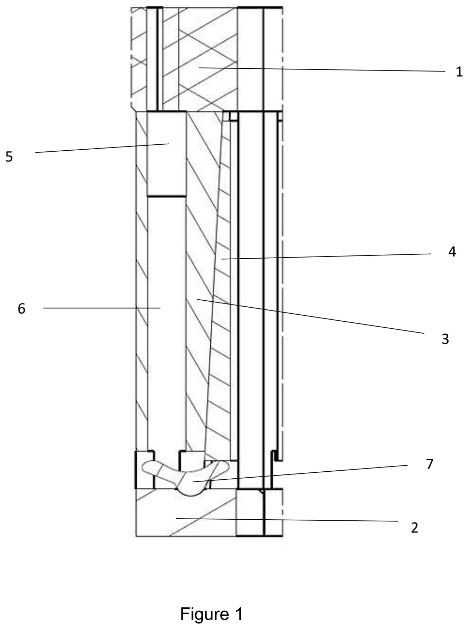

The tool 1 for manufacturing lamination stack for a rotor or a stator of an electric motor according to a possible embodiment comprises a cutting die 1, housing 3 of the brakes, a base 2 of the housing 3 and a braking element 4, which is at the same time the vertical wedge, and a mechanism 5 for faster setting/adjustment of brakes, as shown in figure 1, which comprises:
- a vertical wedge 4, which simultaneously functions as a brake,
- an adjustment element mounted on the base of the brake housing, wherein the adjustment element comprises:
   ∘ a rocking element 7 with a rounded lower part that allows rocking, and with two arms adapted for contact with a spring 6 and the vertical wedge 4, respectively,
   ∘ a pre-tensioned spring 6, which is preferably a disc or spiral spring, and
   ∘ a screw 5 arranged for a contact with the spring and for the pre-tensioning of the spring, wherein the spring allows setting of the braking force, so that the said screw 5 can be used to set the spring 6 to a precise force, so that the latter is movable downwards, which rocks the rocking element and pushes the vertical wedge 4 upwards.
- wherein the vertical wedge 4 is provided with an inclined surface, which is a vertical surface of the wedge arranged to ensure radial movement, which is a consequence of the vertical movement of the whole wedge due to the adjustment of the adjustment element.

Movement of the vertical wedge 4 in the vertical direction upwards increases the gap between the lamellations and the brake 4, thereby increasing the brake effect. And vice versa, when the force is decreased, the vertical wedge 4 is moved downwards, which decreases the effect of the brake.

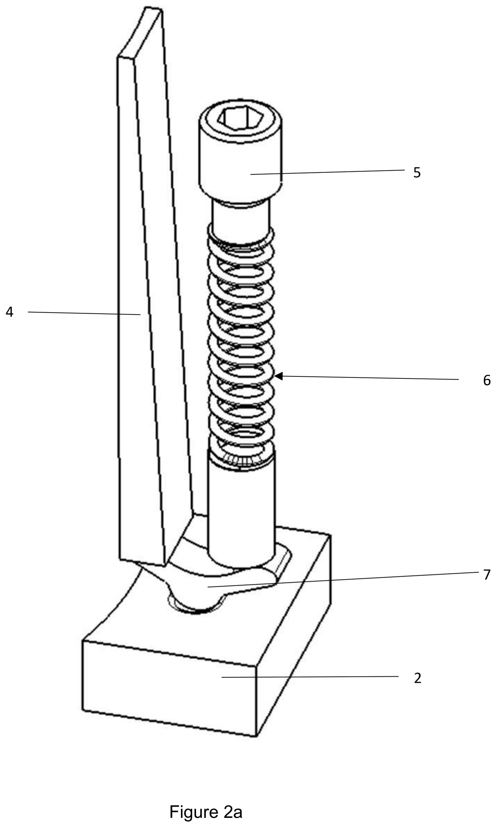

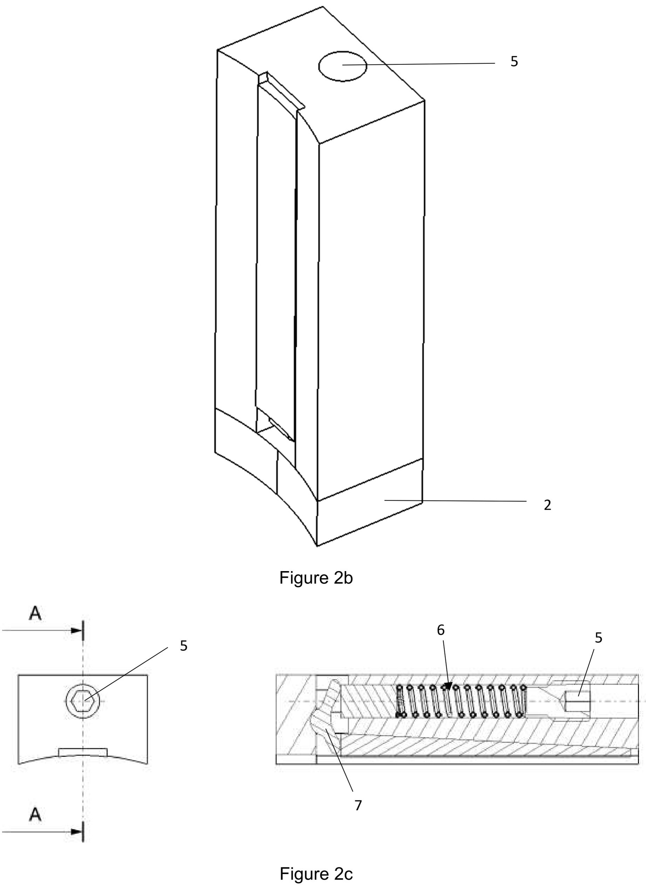

Figure 2a shows the asaid mechanism in cross-section, where the rocking element 7 is visible, through which the vertical movement of the vertical wedge 4 is affected. The rocking element 7 has a rounded surface at the bottom, and the upper part is provided with two arms, one adapted for contact with the spring 6, and the other with the vertical wedge 4. After adjusting the spring 6, the rocking element 7 moves to the desired position, which influences the vertical wedge. Figure 2b shows the mechanism installed into the brake module.

The housing of the tool for manufacturing lamination stack has at least one vertical wedge with the mechanism according to the invention, preferably more, usually between 4 and 8.

As described above, the method of adjustment in case of easy access to the adjustment elements, preferably screws, is simple and comprises adjustment of at least one screw, or more screws, if necessary, with a suitable tool such as a hand tool or a motor-driven tool, to achieve a suitable position of the vertical wedge.

## Claims

1. A tool (1) for manufacturing a lamination stack (P) for a rotor or a stator of an electric motor, said tool (1) comprising a cutting die (2), a system of brakes installed under the cutting die (2) in a housing (3) of the brakes, wherein said system of brakes is arranged to generate pressure and ensure a force needed for connecting laminations into a stack, **characterized in that** the tool (1) further comprises a mechanism (5) for faster adjustment of brakes, which is at least partly installed in the housing (3) of the brakes and comprises:
- a vertical wedge (4), which simultaneously functions as a brake,
- an adjustment element mounted on the base of the brake housing, wherein the adjustment element comprises:
∘ a rocking element (7) with a rounded lower part that allows rocking, and with two arms adapted for contact with a pre-tensioned spring (6) or the vertical wedge (4), respectively,
∘ the pre-tensioned spring (6), and
∘ an element (5), preferably a screw, arranged for a contact with the spring (6) and for the pre-tensioning of the spring (6), wherein the spring (6) allows setting of the braking force, so that the said element (5), preferably the screw, can be used to set the spring (6) to a precise force, so that the latter is movable downwards, which rocks the rocking element (7) and pushes the vertical wedge (4) upwards.

2. The tool according to claim 1, wherein the element (5) for pre-tensioning of the spring (6) is arranged to increase the force on the rocking element (7), which causes vertical movement of the vertical wedge (4) upwards, which increases the gap between the lamellations and the brake, thereby increasing the effect of the brake; and, the element (5) for pre-tensioning of the spring (6) is arranged to decrease the force, wherein the vertical wedge (4) moves downwards, which reduces the effect of the brake.

3. The tool according to claim 1 or 2, wherein the spring (6) is disc or a spiral spring.

4. The tool according to any of the preceding claims, wherein a screw (5) is used to adjust the spring.

5. The tool according to any of the preceding claims, wherein screws (5) are arranged parallelly to the vertical wedge (4) on the outer side, wherein the access to the screws is from the top of the bottom part of the tool (1).

6. The tool according to any of the preceding claims, wherein the housing (3) comprises serveral vertical wedges (4), usually between 4 and 8 wedges, which are evenly distributed.

7. The tool according to any of the preceding claims, wherein the vertical wedge (4) has a shape of a wedge.

8. A method for manufacturing lamination stack of a rotor or a stator of an electric motor using the tool according to any of the preceding claim, wherein said method comprises a step of moving the lamination stack through a cutting die (1) and through a system of brakes, which ensure the force needed to connect the laminations into a stack, wherein the method is **characterized in that** the step of movement of the lamination stack through the cutting die (1) and the system of brakes comprises setting or adjusting at least one nastavitvenega elementa (5), preferably using a screw for adjusting the spring (6), otpionally more screws with a suitable tool, such as a hand tool or a motor driven tool, to achieve a suitable position of the vertical wedge (4).

9. The method according to the preceding claim, wherein adjustment is performed between the hits of the tool or closing of the tool is stopped for few seconds to allow adjustment of brakes and then the lamination stack movement is continued.

10. The method according to any claim from 8 to 9, wherein several adjustments during movement of the lamination stack through the cutting die and the brakes are performed.
